# EUROPÄISCHE PATENTSCHRIFT

(11) **EP 3 086 095 B1**
(45) Veröffentlichungstag und Bekanntmachung des Hinweises auf die Patenterteilung: **13.03.2019**
(21) Anmeldenummer: 15164881.3
(22) Anmeldetag: 23.04.2015
(51) Int. Cl.: G01D 5/14, F16B 31/02, F16B 41/00, B60R 25/00, B60R 25/01, B60R 25/10

(54) **SENSORANORDNUNG ZUM ÜBERWACHEN EINER SCHRAUBVERBINDUNG**
SENSOR ASSEMBLY FOR MONITORING A SCREW CONNECTION
SYSTÈME DE CAPTEUR DESTINÉ À LA SURVEILLANCE D'UNE LIAISON PAR VISSAGE

(43) Veröffentlichungstag der Anmeldung: 26.10.2016
(73) Patentinhaber: Wincor Nixdorf International GmbH, 33106 Paderborn (DE)
(72) Erfinder: Hoppe, Burkhard, 99334 Elleben (DE)

(56) Entgegenhaltungen:
- EP-A1- 0 491 002
- EP-A1- 2 026 310
- DE-A1-102006 055 929
- DE-A1-102009 043 267
- US-A- 5 552 759
- US-A1- 2009 207 008

## Beschreibung

Die Erfindung betrifft eine Sensoranordnung zum Überwachen einer Schraubverbindung zwischen einem ersten Bauelement mit Außengewinde und einem zweiten Bauelement mit Innengewinde. Das zweite Bauelement mit Innengewinde ist mit dem ersten Bauelement mit Außengewinde verbindbar. Die Sensoranordnung umfasst einen Magnetfeldsensor und einen Magneten.

Aus dem Dokument DE 101 04 408 A1 ist eine Anordnung zur elektronischen Sicherung eines durch zumindest ein lösbares Befestigungselement gesicherten Gegenstandes gegen unautorisierte Entfernung und/oder Manipulation bekannt. Die bekannte Anordnung zur elektronischen Sicherung des gesicherten Gegenstandes hat den Nachteil, dass nur ein relativ geringer Grad des Manipulationsschutzes erreicht wird. Ferner hat die bekannte Anordnung den Nachteil, dass die Komponenten der Sensoreinheit einen relativ großen Bauraum benötigen.

Das Dokument US 2009/0207008 A1 offenbart ein System zur Überwachung einer Bolzen-Mutter-Verbindung. Das System umfasst eine Hall-Effekt-Anordnung mit einem Hall-Effekt-Sensor und einem entsprechenden Magneten. Der Hall-Effekt-Sensor wird durch ein detektiertes Magnetfeld mit einer ausreichenden Dichte und einer korrekten Orientierung aktiviert, das von dem Magneten erzeugt werden kann. Wenn die Mutter ordnungsgemäß auf dem Schaft positioniert ist, ist der Hall-Effekt-Sensor in einem ersten Zustand ("on condition"), und wenn die Mutter nicht auf dem Schaft positioniert ist, ist der Hall-Effekt-Sensor in einem zweiten Zustand ("off condition"). In diesem Fall wird der Benutzer gewarnt.

Das Dokument DE 10 2009 043 267 A1 offenbart ein Verschraubungsmittel mit einer Mutter. Es ist eine Sensorkomponente vorgesehen, welche eine von der von der Mutter erzeugten Vorspannkraft abhängige variable Eigenschaft aufweist. Weiterhin offenbart das Dokument DE 10 2009 043 267 A1 ein System zur Überwachung einer Verschraubung.

Ausgehend von dem bekannten Stand der Technik ist es Aufgabe der Erfindung, eine Sensoranordnung zum Überwachen einer Schraubverbindung anzugeben, die einen kompakten Aufbau hat und gleichzeitig eine zuverlässige und genaue Detektion einer Manipulation ermöglicht.

Diese Aufgabe wird durch eine Sensoranordnung mit den Merkmalen des Anspruchs 1 gelöst. Vorteilhafte Weiterbildungen sind in den abhängigen Ansprüchen angegeben.

Durch eine Sensoranordnung mit den Merkmalen des Anspruchs 1 wird ein kompakter Aufbau und gleichzeitig eine zuverlässige und genaue Detektion einer Manipulation erreicht, da insbesondere ein Magnetfeldsensor und ein Magnet in der Sensoranordnung vorgesehen sind. Die zu überwachende Schraubverbindung umfasst ein erstes Bauelement mit Außengewinde und ein zweites Bauelement mit Innengewinde. Das zweite Bauelement mit Innengewinde ist mit dem ersten Bauelement mit Außengewinde verbindbar. Der Magnetfeldsensor ist in das erste Bauelement mit Außengewinde eingeführt. Der Magnet ist in das zweite Bauelement mit Innengewinde integriert. Der Magnetfeldsensor und der Magnet sind derart angeordnet und ausgebildet, dass eine Änderung der Relativposition zwischen dem Magneten und dem Magnetfeldsensor detektierbar ist. Ferner stellt die Sensoranordnung bei einer Detektion einer Änderung der Relativposition zwischen dem Magneten und dem Magnetfeldsensor einen manipulierten Zustand der Schraubverbindung fest. Somit kann ein relativ geringer Grad des Manipulationsschutzes vermieden werden. Ferner können Komponenten, die einen relativ großen Bauraum benötigen, weggelassen werden. Dies ermöglicht den kompakten Aufbau und gleichzeitig die zuverlässige und genaue Detektion der Manipulation.

Vorzugsweise wird eine erste Relativposition zwischen dem Magneten und dem Magnetfeldsensor in einem verbundenen Zustand der Schraubverbindung erfasst und als Soll-Position gespeichert. Somit kann eine erste Relativposition als Soll-Position bereitgestellt werden. Dabei entspricht die Soll-Position dem verbundenen bzw. nicht manipulierten Zustand der Schraubverbindung.

Vorzugsweise erfasst die Sensoranordnung eine zweite Relativposition zwischen dem Magneten und dem Magnetfeldsensor und vergleicht diese mit der als Soll-Position gespeicherten ersten Relativposition. Somit kann eine zweite Relativposition bereitgestellt werden, die dem aktuellen Zustand der Schraubverbindung entspricht. Durch den Vergleich der zweiten Relativposition mit der ersten Relativposition kann eine Information über den manipulierten Zustand der Schraubverbindung erhalten werden.

Vorzugsweise erfasst die Sensoranordnung die zweite Relativposition wiederholt. Somit kann eine zyklische Abfrage der zweiten Relativposition erreicht werden. Dabei erfolgt die zyklische Abfrage vorzugsweise in regelmäßigen Zeitabständen.

Vorzugsweise erfasst die Sensoranordnung die zweite Relativposition bei einem Umschalten von einem ausgeschalteten Zustand der Sensoranordnung auf einen eingeschalteten Zustand der Sensoranordnung. Somit kann eine im ausgeschalteten Zustand der Sensoranordnung erfolgte Manipulation nach dem Wiedereinschalten der Sensoranordnung automatisch erkannt werden. Dabei entspricht der ausgeschaltete Zustand der Sensoranordnung insbesondere einem stromlosen Zustand.

Vorzugsweise stellt die Sensoranordnung den manipulierten Zustand der Schraubverbindung fest, wenn die erste Relativposition und die zweite Relativposition voneinander verschieden sind. Somit kann eine Manipulationserkennung basierend auf einem Soll-Ist-Vergleich realisiert werden.

Die Änderung der Relativposition zwischen dem Magneten und dem Magnetfeldsensor entspricht einem Drehwinkel um eine Längsachse der Schraubverbindung. Somit kann die Detektion der Manipulation mit Hilfe einer Drehwinkelmessung durchgeführt werden.

Der Drehwinkel ist innerhalb eines Drehwinkelbereichs von 0,1° bis 5° oder von 0,2° bis 0,5° mit einer Toleranz von +/- 0,1° detektierbar. Somit kann ein relativ hoher Grad des Manipulationsschutzes erreicht werden.

Vorzugsweise umfasst das erste Bauelement mit Außengewinde ein Gewinderohr. Ferner umfasst das zweite Bauelement mit Innengewinde vorzugsweise eine Hutmutter. Somit können geeignete Bauelemente für die Schraubverbindung der Sensoranordnung bereitgestellt werden.

Vorzugsweise sind der Magnet an einer Innenseite eines Huts der Hutmutter und der Magnetfeldsensor an einem dem Magneten im verbundenen Zustand der Schraubverbindung zugewandten Ende des Gewinderohrs angeordnet. Somit kann eine kompakte Anordnung der Sensorkomponenten realisiert werden. Ferner wird das durch eine vergleichsweise präzise Detektion der Manipulation erreicht.

Vorzugsweise entspricht der Durchmesser der Innenwand des Gewinderohrs der Ausdehnung des Magnetfeldsensors quer zur Längsachse der Schraubverbindung. Somit wird der minimal mögliche Durchmesser des Gewinderohrs nur durch die Querausdehnung des Magnetfeldsensors begrenzt.

Vorzugsweise umfasst die Schraubverbindung ein drittes Bauelement mit Innengewinde. Das dritte Bauelement mit Innengewinde ist mit dem ersten Bauelement mit Außengewinde verbindbar. Ferner ist im verbundenen Zustand der Schraubverbindung der Abstand zwischen dem dritten Bauelement mit Innengewinde und dem zweiten Bauelement mit Innengewinde variabel einstellbar. Somit kann der Abstand zwischen dem dritten Bauelement mit Innengewinde und dem zweiten Bauelement mit Innengewinde an die Abmessungen der mit Hilfe der Schraubverbindung zu befestigenden Gehäuseelemente angepasst werden. Dabei ist das dritte Bauelement mit Innengewinde vorzugsweise eine an dem ersten Bauelement mit Außengewinde fixierte Kontermutter.

Vorzugsweise umfasst der Magnetfeldsensor einen Hall-Sensor. Mit Hilfe dieser Sensorkomponente kann eine präzise Positionsbestimmung bzw. Drehwinkelmessung erreicht werden. Dabei ist der Hall-Sensor vorzugsweise in ein Hall-IC ("Integrated Circuit") integriert.

Vorzugsweise gibt die Steuereinheit bei einer Feststellung des manipulierten Zustands der Schraubverbindung eine entsprechende Information aus. Somit kann der Benutzer bei einer Manipulationserkennung sofort über den manipulierten Zustand der Schraubverbindung informiert werden.

Weitere Ausführungsbeispiele umfassen ein System mit mehreren der im Vorhergehenden beschriebenen Sensoranordnungen. Vorzugsweise ist das System derart ausgebildet, dass jede Sensoranordnung im System eindeutig identifizierbar ist. Somit kann vorzugsweise über eine eindeutige MAC-Adresse der exakte Manipulationsort von jeder Sensoranordnung registriert werden.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert.

Es zeigen:
- Figur 1: eine Schnittansicht eines Ausführungsbeispiels einer Sensoranordnung zum Überwachen einer Schraubverbindung;
- Figur 2a: eine schematische, perspektivische Darstellung einer relativen Anordnung eines Magneten und eines Magnetfeldsensors der Sensoranordnung nach Figur 1;
- Figur 2b: eine schematische Darstellung zur Veranschaulichung eines Drehwinkels bei einer Änderung der Relativposition zwischen dem Magneten und dem Magnetfeldsensor nach Figur 2a;
- Figur 3: ein Blockdiagramm von Komponenten der Sensoranordnung nach Figur 1 mit einem Magnetfeldsensor und einer Auswerteeinheit; und
- Figur 4: eine schematische Darstellung eines Ausführungsbeispiels eines Systems mit mehreren Sensoranordnungen nach Figur 1.

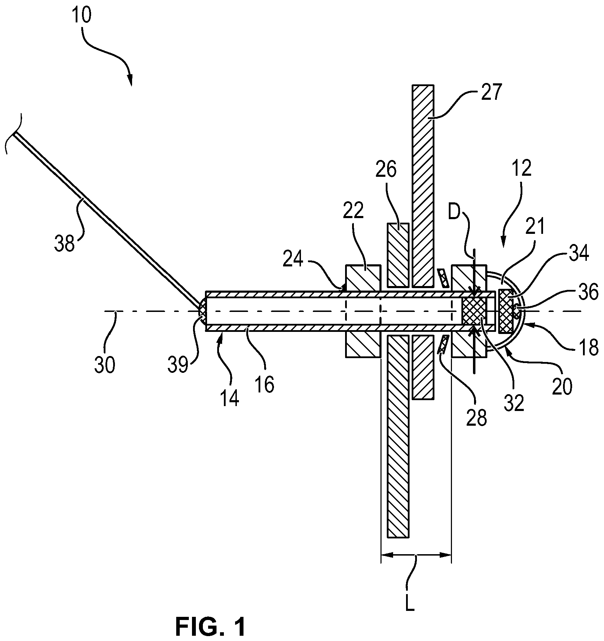

Figur 1 zeigt eine Schnittansicht eines Ausführungsbeispiels einer Sensoranordnung 10 zum Überwachen einer Schraubverbindung 12. Wie in Figur 1 gezeigt, umfasst die Schraubverbindung 12 ein erstes bis drittes Bauelement 14, 18, 22. Das erste Bauelement 14 umfasst ein Gewinderohr 16, während das zweite Bauelement 18 eine Hutmutter 20 umfasst. Das dritte Bauelement 22 ist vorzugsweise eine an dem Gewinderohr 16 fixierte Kontermutter. Die Kontermutter 22 ist mit Hilfe eines Befestigungsmittels 24 an dem Gewinderohr 16 fixiert. Das Befestigungsmittel 24 umfasst beispielsweise eine Schweißstelle, eine Lötstelle oder eine Klebestelle. In Figur 1 ist beispielhaft ein verbundener Zustand der Schraubverbindung 12 dargestellt. Dabei sind das erste bis dritte Bauelement 14, 18, 22 auf einer gemeinsamen Längsachse 30 der Schraubverbindung 12 angeordnet. Die Längsachse 30 der Schraubverbindung 12 stellt eine zentrale Achse dar, die sich parallel zum Gewinderohr 16 erstreckt.

Die in Figur 1 gezeigte Schraubverbindung 12 dient zur Befestigung von verschiedenen Gehäuseelementen 26, 27 beispielsweise eines Pfandrücknahmesystems. Die verschiedenen Gehäuseelemente 26, 27 werden mit Hilfe der als primäre Mutter dienenden Hutmutter 20 und der Kontermutter 22 miteinander befestigt. Dabei ist der Abstand L der Hutmutter 20 und der Kontermutter 22 variabel einstellbar. Vorzugsweise ist dieser Abstand L an die Abmessungen der Gehäuseelemente 26, 27 angepasst. Ferner ist zwischen der Hutmutter 20 und den Gehäuseelementen 26, 27 eine Federscheibe 28 zur Schraubensicherung vorgesehen. Das Außengewinde des Gewinderohrs 16 und das Innengewinde der Hutmutter 20 bzw. der Kontermutter 22 sind komplementär zueinander ausgeführt. Die in Figur 1 gezeigte Schraubverbindung 12 wird vorzugsweise durch das Gewinderohr 16, die Hutmutter 20, die Kontermutter 22 und die Federscheibe 28 gebildet.

Bei dem in Figur 1 gezeigten Ausführungsbeispiel umfassen das Gewinderohr 16, die Hutmutter 20 und die Federscheibe 28 vorzugsweise nicht magnetische Materialien. Beispielsweise sind diese nicht magnetischen Materialien Messing oder Edelstahl. Ferner umfassen die Gehäuseelemente 26, 27 jeweils Bleche.

Die Sensoranordnung 10 gemäß Figur 1 umfasst einen Magnetfeldsensor 32 und einen Magneten 34. Wie in Figur 1 gezeigt, ist der Magnetfeldsensor 32 in das Gewinderohr 16 eingeführt. Ferner ist der Magnet 34 in die Hutmutter 20 integriert. Ferner ist in Figur 1 gezeigt, dass der Magnetfeldsensor 32 an einem dem Magneten 34 zugewandten Ende des Gewinderohrs 16 angeordnet ist, während der Magnet 34 mit Hilfe eines Klebepunkts 36 an einer Innenseite eines Huts 21 der Hutmutter 20 angeordnet ist. Bei dem in Figur 1 gezeigten Ausführungsbeispiel entspricht der Durchmesser der Innenwand des Gewinderohrs 16 der Ausdehnung D des Magnetfeldsensors 32 quer zur Längsachse 30 der Schraubverbindung 12.

Der in das Gewinderohr 16 der Schraubverbindung 12 eingeführte Magnetfeldsensor 32 stellt eine Komponente der Sensoranordnung 10 dar, mit deren Hilfe die Relativposition zwischen dem Magneten 34 und dem Magnetfeldsensor 32 erfasst werden kann. Die in Figur 1 gezeigte Sensoranordnung 10 umfasst ein Anschlusskabel 38, dass über eine Vergussmasse 39 mit dem Gewinderohr 16 elektrisch verbunden ist. Wie in Figur 1 gezeigt, ist die Vergussmasse 39 an einem dem Magneten 34 abgewandten Ende des Gewinderohrs 16 angeordnet. Ferner ist der Magnetfeldsensor 32, der an dem dem Magneten 34 zugewandten Ende des Gewinderohrs 16 angeordnet ist, mit dem Gewinderohr 16 elektrisch verbunden.

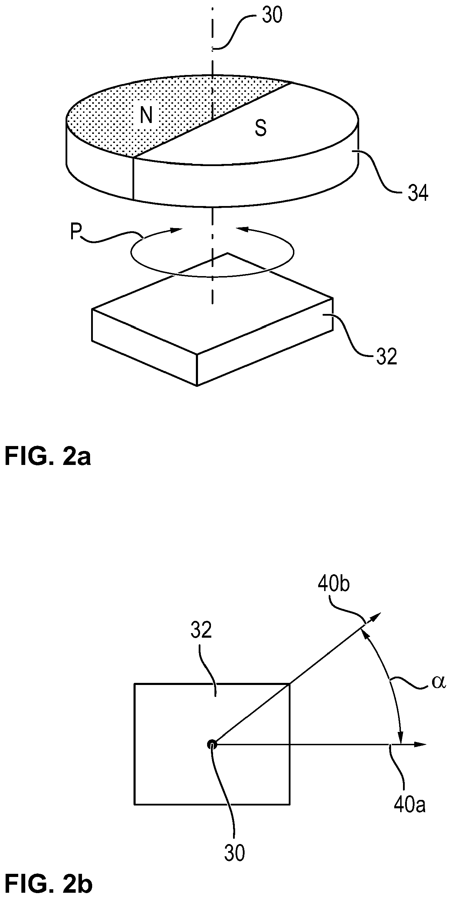

Figur 2a zeigt eine schematische, perspektivische Darstellung einer relativen Anordnung eines Magneten 34 und eines Magnetfeldsensors 32 der Sensoranordnung 10 nach Figur 1. Wie in Figur 2a schematisch dargestellt, ist der Magnet 34 vorzugsweise ein radialer Magnet. Ferner umfasst der Magnetfeldsensor 32 vorzugsweise einen Hall-Sensor, wie beispielsweise einen in ein Hall-IC integrierten Hall-Sensor. Der Magnet 34 und der Magnetfeldsensor 32 sind auf der zentralen, gemeinsamen Längsachse 30 der in Figur 1 gezeigten Schraubverbindung 12 angeordnet. Dabei nehmen diese Komponenten 32, 34 der Sensoranordnung 10 eine bestimmte Relativposition zueinander ein. Die Änderung der Relativposition zwischen diesen beiden Komponenten 32, 34 ist in Figur 2a durch den Doppelpfeil P angedeutet. Vorzugsweise werden die Komponenten 32, 34 bei einer Manipulation der Schraubverbindung 12 relativ zueinander verdreht. Ferner kann sich auch der Abstand zwischen den Komponenten 32, 34 bei einer Manipulation der Schraubverbindung 12 ändern.

Dabei vergrößert oder verkleinert sich der Abstand zwischen den Komponenten 32, 34 entlang der Längsachse 30 der Schraubverbindung 12.

Figur 2b zeigt eine schematische Darstellung zur Veranschaulichung eines Drehwinkels α bei einer Änderung der Relativposition 40a, 40b zwischen dem Magneten 34 und dem Magnetfeldsensor 32 nach Figur 2a. Die schematische Darstellung von Figur 2b entspricht einer Draufsicht auf die in Figur 2a gezeigte Anordnung mit den Komponenten 32, 34, wobei die Komponente 34 nicht dargestellt ist. Wie in Figur 2b gezeigt, liegt der Magnetfeldsensor 32 auf der in Figur 2a gezeigten Längsachse 30 der Schraubverbindung 12. Ferner sind in Figur 2b eine erste Relativposition 40a zwischen den Komponenten 32, 34 und eine zweite Relativposition 40b zwischen den Komponenten 32, 34 dargestellt. Dabei ist die Relativposition 40a, 40b jeweils einem radialen Vektor zugeordnet, der die Ausrichtung des Magneten 34 beschreibt. Die Ausrichtung des Magneten 34 ist beispielsweise durch die Lage des Südpols S bzw. des Nordpols N gegeben. Der Drehwinkel α ergibt sich bei einer Änderung von der ersten Relativposition 40a auf die zweite Relativposition 40b. Dabei wird die Änderung der Relativposition 40a, 40b durch eine Manipulation an der Schraubverbindung 12 verursacht.

Gemäß Figur 2a, 2b entspricht die Relativposition 40a, 40b zwischen den Komponenten 32, 34 einer mit Hilfe des Magnetfeldsensors 32 ermittelten Magnetfeldstärke. D. h., die jeweils ermittelte Magnetfeldstärke kann der jeweiligen Relativposition 40a, 40b zwischen den Komponenten 32, 34 zugeordnet werden. Bezugnehmend auf Figur 1, 2a und 2b dient die Sensoranordnung 10 zur Erfassung der Änderung der Relativposition 40a, 40b zwischen den Komponenten 32, 34 basierend auf einer Drehwinkelmessung. Bei der Drehwinkelmessung wird vorzugsweise der in Figur 2b gezeigte Drehwinkel α mit Hilfe des Magnetfeldsensors 32 gemessen. Dabei ist der Drehwinkel α vorzugsweise innerhalb eines Drehwinkelbereichs von 0,2° bis 0,5° mit einer Toleranz von +/- 0,1° detektierbar. Somit kann eine hohe Genauigkeit der Drehwinkelmessung erreicht werden.

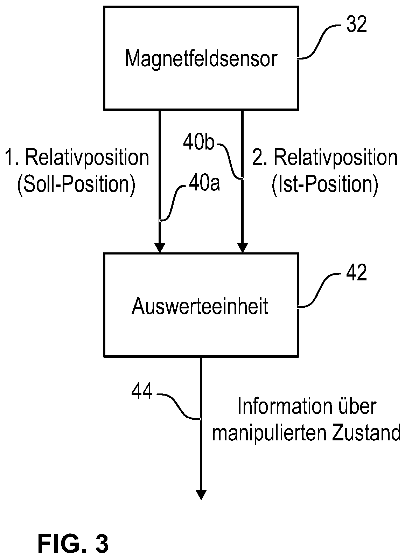

Figur 3 zeigt ein Blockdiagramm von Komponenten der Sensoranordnung 10 nach Figur 1 mit einem Magnetfeldsensor 32 und einer Auswerteeinheit 42. Der Magnetfeldsensor 32 dient zur Erfassung der auch als Soll-Position bezeichneten ersten Relativposition 40a und der auch als Ist-Position bezeichneten zweiten Relativposition 40b. Die erste Relativposition 40a wird in einem verbundenen Zustand der Schraubverbindung 12 mit Hilfe des Magnetfeldsensors 32 erfasst und in einem Speicher (nicht dargestellt) als Soll-Position gespeichert. Ferner wird die Ist-Position 40b mit Hilfe des Magnetfeldsensors 32 zyklisch, d. h. in regelmäßigen Zeitabständen, erfasst. Die Ist-Position 40b wird vorzugsweise erfasst, sobald die Sensoranordnung 10 von einem ausgeschalteten Zustand auf einen eingeschalteten Zustand umgeschaltet wird. Ferner dient die Auswerteeinheit 42 zum Vergleich der Ist-Position 40b mit der im Speicher gespeicherten Soll-Position 40a. Das Ergebnis dieses Soll-Ist-Vergleichs liefert eine Information 44 über den manipulierten Zustand der Schraubverbindung 12. Diese Information 44 über den manipulierten Zustand kann von der Auswerteeinheit 42 an einen Benutzer weitergeleitet werden. Vorzugsweise wird der manipulierte Zustand der Schraubverbindung 12 von der Auswerteeinheit 42 festgestellt, wenn die Soll-Position 40a und die Ist-Position 40b voneinander verschieden sind. Für den Fall, dass die Soll-Position 40a und die Ist-Position 40b gleich sind, liegt ein nicht manipulierter Zustand der Schraubverbindung 12 vor. Somit kann eine einfache und zuverlässige Feststellung des manipulierten Zustands der Schraubverbindung 12 erreicht werden.

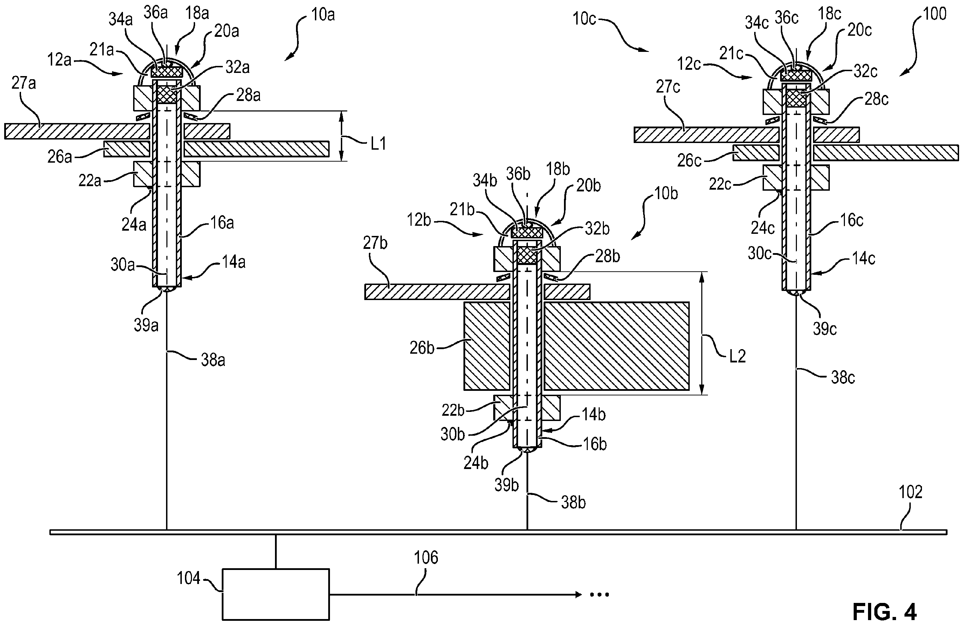

Figur 4 zeigt eine schematische Darstellung eines Ausführungsbeispiels eines Systems 100 mit mehreren Sensoranordnungen 10a, 10b, 10c nach Figur 1. Die in Figur 4 gezeigten Sensoranordnungen 10a, 10b, 10c mit den Komponenten 12a bis 39a, 12b bis 39b bzw. 12c bis 39c entsprechen im Wesentlichen der in Figur 1 gezeigten Sensoranordnung 10 mit den Komponenten 12 bis 39. Zur Veranschaulichung sind in Figur 4 insbesondere zwei Sensoranordnungen 10a, 10b gezeigt, bei denen die Abstände L1, L2 zwischen der Hutmutter 20a und der Kontermutter 22a bzw. zwischen der Hutmutter 20b und der Kontermutter 22b unterschiedlich sind. Dabei sind die Abstände L1, L2 in den Sensoranordnungen 10a, 10b jeweils an die Abmessungen der Gehäuseelemente 26a, 27a bzw. 26b, 27b angepasst. Wie in Figur 4 schematisch dargestellt, sind die Sensoranordnungen 10a, 10b, 10c jeweils über ihre Anschlusskabel 38a, 38b, 38c mit einem seriellen Bus 102, wie z. B. ein Eindraht-Bus, verbunden. Ferner ist gemäß Figur 4 der serielle Bus 102 mit einer Auswerteelektronik 104 verbunden. Die Auswerteelektronik 104 dient zur Auswertung der von den Sensoranordnungen 10a bis 10c gelieferten Sensorsignale. Ferner kann ein von der Auswerteelektronik 104 bereitgestelltes serielles Protokoll 106 für die Steuerung einer zyklischen Abfrage verwendet werden. Das System 100 von Figur 4 stellt vorzugsweise ein System mit 1, 2, ..., n Sensoranordnungen 10a bis 10c mit einer Busschnittstelle und jeweils einer eindeutigen MAC-Adresse dar. Mit Hilfe dieser eindeutigen MAC-Adresse kann jede Sensoranordnung 10a, 10b, 10c im System 100 eindeutig identifiziert werden. Die Feststellung des manipulierten Zustands der jeweiligen Schraubverbindung 12a bis 12c erfolgt dabei wie bei der anhand von Figur 1 bis 3 beschriebenen Sensoranordnung 10. Somit kann auch bei einer Vielzahl von Sensoranordnungen 10a, 10b, 10c im System 100 der exakte Manipulationsort registriert werden.

Die vorliegende Erfindung ermöglicht einen erhöhten Manipulationsschutz an Maschinen und Anlagen, wie z. B. einem Pfandrücknahmesystem, mit Hilfe der überwachten Schraubverbindung. Das Prinzip dieses Manipulationsschutzes beruht auf der Ausnutzung der Eigenschaften des sehr kleinen Magnetfeldsensors 32. Dieser dient vorzugsweise zur Detektion des Drehwinkels α bei einer Drehung des radialen Magneten 34 relativ zu den Magnetfeldsensor 32. Anstelle des beispielsweise in dem Hall-IC integrierten Hall-Sensors kann auch ein induktiver Sensor kleiner Bauform verwendet werden. Dabei umfasst der induktive Sensor vorzugsweise eine Spule.

Gemäß der vorliegenden Erfindung ist der Magnetfeldsensor 32 in der Lage, einen Drehwinkel α von 0,5° und weniger stabil zu erfassen.

Bei Ausführungsbeispielen wird die Position der Hutmutter 20 gegenüber dem Gewinderohr 16 exakt erfasst und diese Position als Soll-Wert abgespeichert. Der Soll-Wert entspricht dabei der Position der festgezogenen Hutmutter 20. Wird nun die Ist-Position von dem zu schützenden System, wie z. B. über ein Bussystem 102, zyklisch abgefragt (IstWert), so wird ein Manipulationsversuch bzw. ein Verdrehen der Hutmutter 20 sofort registriert. Erfolgt die Manipulation im stromlosen Zustand, dann wird dieser nach dem Wiedereinschalten festgestellt.

Bei der erfindungsgemäßen Sensoranordnung 10 ist das Gewinderohr 16 als nicht magnetischer Holzylinder ausgebildet. Der Holzylinder enthält die Sensorik, die insbesondere den Magnetfeldsensor 32 umfasst. Der minimal mögliche Durchmesser des Gewinderohrs 16 ist lediglich von der Größe des Magnetfeldsensors 32 abhängig. Die Schaftlänge kann mit einer fixierten Mutter 22 an die jeweilige Befestigungsaufgabe angepasst werden. Das Fixieren der Mutter 22 erfolgt dabei durch Schweißen, Löten oder Kleben. Bei Ausführungsbeispielen sind Anordnungen in Durchzügen, vorzugsweise mit der fixierten Kontermutter 22, möglich. Ferner ist in die nicht magnetische Hutmutter 20 der radiale Magnet 34 geeigneter Stärke verklebt.

Die erfindungsgemäße Sensoranordnung 10 ist immer dann von Nutzen, wenn Serviceöffnungen, Gehäuseelemente oder Sensorbefestigungen gegen unbefugtes Öffnen bzw. Verändern gesichert werden sollen. Die Schraubverbindung 12 bleibt dabei jederzeit lösbar. Dies ermöglicht einen Servicezugriff. Jedoch kann nur eine autorisierte Person, wie z. B. über Zugriffscodes, das System auf die neuen Bedingungen, d. h. neue Soll-Werte, nach erneuter Montage einstellen und somit wieder frei geben.

Sofern keine Freigabe erfolgt bzw. eine Manipulation vorliegt, wird die Funktion der Maschine bzw. Anlage nach dem Wiedereinschalten gesperrt. Ein Vorteil der Erfindung liegt also darin, dass nicht der Zugang bzw. die Veränderung an der Schraubverbindung 12 verhindert wird, sondern dass die Manipulation sicher festgestellt und ggf. eine entsprechende Information über die Manipulation unter Verwendung der auch als Steuereinheit bezeichneten Auswerteelektronik 104 ausgegeben werden kann.

Ferner hat die vorliegende Erfindung den Vorteil, dass jeder Manipulationsversuch, d. h. auch ein gewalttätiger Manipulationsversuch dafür sorgt, dass die Relativposition des Magneten 34 relativ zum Magnetfeldsensor 32 verändert wird und somit die Ist-Position nicht mehr der gespeicherten Soll-Position entspricht. Sofern der Magnetfeldsensor 32 zerstört wird, wird dies durch die Sensoranordnung 10 ebenfalls registriert.

Bei mehreren Sensoranordnungen 10a, 10b, 10c im System 100 kann zusätzlich der exakte Manipulationsort registriert werden, falls jede Sensoranordnung 10a, 10b, 10c über eine eindeutige MAC-Adresse verfügt.

An bekannten Maschinen und Anlagen, hier im Besonderen bei Pfandrücknahmesystemen (RVS), besteht die Gefahr, dass der Anwender die bestehenden Sicherheitsmaßnahmen gegen Manipulationen, bzw. für feste Prozessabläufe durch Veränderungen an den bekannten Anlagen umgeht, um sich dadurch zeitliche oder finanzielle Vorteile zu verschaffen. Im Gegensatz dazu ermöglicht es die vorliegende Erfindung, dass die Maschine oder Anlage diese Manipulation als solche erkennt und die Funktion damit gesperrt werden kann, bis durch qualifiziertes Personal ein Rücksetzen erfolgt ist.

Spezielle Anforderungen der DPG (Deutsche Pfandgesellschaft) verlangen einen geeigneten Manipulationsschutz in Pfandrücknahmesystemen, um zu verhindern, dass die Besitzer dieser Maschinen diese zur Erlangung finanzieller Vorteile missbrauchen. Diese speziellen Anforderungen können mit Hilfe der erfindungsgemäßen Sensoranordnung 10 erfüllt werden. Insbesondere ermöglicht es die vorliegende Erfindung, dass das Öffnen von Servicezugängen und das Verrücken bzw. Verstellen der Schraubverbindung 12 zuverlässig detektiert und dokumentiert werden kann.

Mit Hilfe der vorliegenden Erfindung kann auch ohne anliegende Stromversorgung, also nachträglich, eine Veränderung bzw. Manipulation an einer lösbaren Schraubverbindung festgestellt werden. Dabei ist der erreichbare Grad des Manipulationsschutzes sehr hoch. Ferner kann mit Hilfe der vorliegenden Erfindung eine elektronische Überwachung einer lösbaren Schraubverbindung realisiert werden.

### Bezugszeichenliste

- 10, 10a, 10b, 10c: Sensoranordnung
- 12a bis 39a, 12b bis 39b, 12c bis 39c: Komponenten einer Sensoranordnung
- 12: Schraubverbindung
- 14, 18, 22: Bauelement
- 16: Gewinderohr
- 20: Hutmutter
- 21: Hut der Hutmutter
- 22: Kontermutter
- 24: Befestigungsmittel
- 26, 27: Gehäuseelement
- 28: Federscheibe
- 30: Längsachse
- 32: Magnetfeldsensor
- 34: Magnet
- 36: Klebepunkt
- 38: Anschlusskabel
- 39: Vergussmasse
- 40a, 40b: Relativposition
- 42: Auswerteeinheit
- 44: Information
- 100: System
- 102: serieller Bus
- 104: Auswerteelektronik
- 106: serielles Protokoll
- α: Drehwinkel
- L, L1, L2: Abstand
- P: Drehrichtung
- D: Ausdehnung

## Patentansprüche

1. Sensoranordnung (10) zum Überwachen einer Schraubverbindung (12) zwischen einem ersten Bauelement (14) mit Außengewinde und einem zweiten Bauelement (18) mit Innengewinde, wobei das zweite Bauelement (18) mit Innengewinde mit dem ersten Bauelement (14) mit Außengewinde verbindbar ist,
mit einem Magnetfeldsensor (32) und einem Magneten (34), wobei der Magnet (34) in das zweite Bauelement (18) mit Innengewinde integriert ist,
wobei der Magnetfeldsensor (32) und der Magnet (34) derart angeordnet und ausgebildet sind, dass eine Änderung der Relativposition (40a, 40b) zwischen dem Magneten (34) und dem Magnetfeldsensor (32) detektierbar ist,
wobei die Sensoranordnung (10) bei einer Detektion einer Änderung der Relativposition (40a, 40b) zwischen dem Magneten (34) und dem Magnetfeldsensor (32) einen manipulierten Zustand der Schraubverbindung (12) feststellt, und
wobei die Änderung der Relativposition (40a, 40b) zwischen dem Magneten (34) und dem Magnetfeldsensor (32) einem Drehwinkel (a) um eine Längsachse (30) der Schraubverbindung (12) entspricht,
wobei der Magnetfeldsensor (32) in das erste Bauelement (14) mit Außengewinde eingeführt ist,
**dadurch gekennzeichnet, dass** der Magnetfeldsensor (32) derart ausgebildet ist, dass der Drehwinkel (α) innerhalb eines Drehwinkelbereichs von 0,1 ° bis 5 ° oder von 0,2 ° bis 0,5 ° mit einer Toleranz von +/- 0,1 ° detektierbar ist.

2. Sensoranordnung (10) nach Anspruch 1, **dadurch gekennzeichnet, dass** sie dazu ausgelegt ist, eine erste Relativposition (40a) zwischen dem Magneten (34) und dem Magnetfeldsensor (32) in einem verbundenen Zustand der Schraubverbindung (12) zu erfassen und als Soll-Position zu speichern.

3. Sensoranordnung (10) nach Anspruch 2, **dadurch gekennzeichnet, dass** die Sensoranordnung dazu ausgelegt ist, eine zweite Relativposition (40b) zwischen dem Magneten (34) und dem Magnetfeldsensor (32) zu erfassen und mit der als Soll-Position gespeicherten ersten Relativposition (40a) zu vergleichen.

4. Sensoranordnung (10) nach Anspruch 3, **dadurch gekennzeichnet, dass** die Sensoranordnung dazu ausgelegt ist, die zweite Relativposition (40b) wiederholt zu erfassen

5. Sensoranordnung (10) nach Anspruch 3 oder 4, **dadurch gekennzeichnet, dass** die Sensoranordnung dazu ausgelegt ist, die zweite Relativposition (40b) bei einem Umschalten von einem ausgeschalteten Zustand der Sensoranordnung (10) auf einen eingeschalteten Zustand der Sensoranordnung (10) zu erfassen.

6. Sensoranordnung (10) nach einem der Ansprüche 3 bis 5, **dadurch gekennzeichnet, dass** die Sensoranordnung dazu ausgelegt ist, den manipulierten Zustand der Schraubverbindung (12) festzustellen, wenn die erste Relativposition (40a) und die zweite Relativposition (40b) voneinander verschieden sind.

7. Sensoranordnung (10) nach einem der Ansprüche 1 bis 6, **dadurch gekennzeichnet, dass** das erste Bauelement (14) mit Außengewinde ein Gewinderohr (16) und das zweite Bauelement (18) mit Innengewinde eine Hutmutter (20) umfassen.

8. Sensoranordnung (10) nach Anspruch 7, **dadurch gekennzeichnet, dass** der Magnet (34) an einer Innenseite eines Huts (21) der Hutmutter (20) und der Magnetfeldsensor (32) an einem dem Magneten (34) im verbundenen Zustand der Schraubverbindung (12) zugewandten Ende des Gewinderohrs (16) angeordnet sind.

9. Sensoranordnung (10) nach Anspruch 7 oder 8, **dadurch gekennzeichnet, dass** der Durchmesser der Innenwand des Gewinderohrs (16) der Ausdehnung (S) des Magnetfeldsensors (32) quer zur Längsachse (30) der Schraubverbindung (12) entspricht.

10. Sensoranordnung (10) nach einem der Ansprüche 1 bis 9, **dadurch gekennzeichnet, dass** die Schraubverbindung (12) ein drittes Bauelement (22) mit Innengewinde umfasst, wobei das dritte Bauelement (22) mit Innengewinde mit dem ersten Bauelement (14) mit Außengewinde verbindbar ist, und dass im verbundenen Zustand der Schraubverbindung (12) der Abstand (L) zwischen dem dritten Bauelement (22) mit Innengewinde und dem zweiten Bauelement (18) mit Innengewinde variabel einstellbar ist.

11. Sensoranordnung (10) nach einem der Ansprüche 1 bis 10, **dadurch gekennzeichnet, dass** der Magnetfeldsensor (32) einen Hall-Sensor umfasst.

12. Sensoranordnung (10) nach einem der Ansprüche 1 bis 11, **dadurch gekennzeichnet, dass** sie eine Steuereinheit umfasst, welche dazu ausgelegt ist, bei einer Feststellung des manipulierten Zustands der Schraubverbindung (12) eine entsprechende Information auszugeben.

13. System (100) mit mehreren Sensoranordnungen (10a, 10b, 10c) gemäß einem der Ansprüche 1 bis 12, wobei jede Sensoranordnung (10a, 10b, 10c) dazu ausgelegt ist, bei einer Detektion einer Änderung der Relativposition (40a, 40b) zwischen dem jeweiligen Magneten (34a, 34b, 34c) und dem jeweiligen Magnetfeldsensor (32a, 32b, 32c) einen manipulierten Zustand der jeweiligen Schraubverbindung (12a, 12b, 12c) festzustellen, wobei das System (100) derart ausgebildet ist, dass jede Sensoranordnung (10a, 10b, 10c) mit Hilfe einer eindeutigen MAC-Adresse im System (100) eindeutig identifizierbar ist, und wobei das System (100) derart ausgebildet ist, dass der exakte Manipulationsort von jeder Sensoranordnung (10a, 10b, 10c) über diese eindeutige MAC-Adresse registrierbar ist.

## Claims

1. Sensor assembly (10) for monitoring a screw connection (12) between a first component (14) with an external thread and a second component (18) with an internal thread, the second component (18) with an internal thread being connectable to the first component (14) with an external thread,
having a magnetic field sensor (32) and a magnet (34), the magnet (34) being integrated in the second component (18) with an internal thread,
the magnetic field sensor (32) and the magnet (34) being arranged and formed in such a way that a change in the relative position (40a, 40b) between the magnet (34) and the magnetic field sensor (32) is detectable,
the sensor assembly (10) determining that there is a manipulated state of the screw connection (12) in the event of a detection of a change in the relative position (40a, 40b) between the magnet (34) and the magnetic field sensor (32), and
the change in the relative position (40a, 40b) between the magnet (34) and the magnetic field sensor (32) corresponding to a rotational angle (α) about a longitudinal axis (30) of the screw connection (12),
the magnetic field sensor (32) being inserted into the first component (14) with an external thread,
**characterized in that**
the magnetic field sensor (32) is formed in such a way that the rotational angle (α) is detectable within a rotational angle range of 0.1° to 5° or 0.2° to 0.5° with a tolerance of +/- 0.1°.

2. Sensor assembly (10) according to Claim 1, **characterized in that** it is designed to measure a first relative position (40a) between the magnet (34) and the magnetic field sensor (32) when the screw connection (12) is in a connected state, and to store the same as a target position.

3. Sensor assembly (10) according to Claim 2, **characterized in that** the sensor assembly is designed to measure a second relative position (40b) between the magnet (34) and the magnetic field sensor (32), and to compare the same with the first relative position (40a) stored as the target position.

4. Sensor assembly (10) according to Claim 3, **characterized in that** the sensor assembly is designed to measure the second relative position (40b) repeatedly.

5. Sensor assembly (10) according to Claim 3 or 4, **characterized in that** the sensor assembly is designed to measure the second relative position (40b) in the event of a change from a switched-off state of the sensor assembly (10) to a switched-on state of the sensor assembly (10).

6. Sensor assembly (10) according to one of Claims 3 to 5, **characterized in that** the sensor assembly is designed to detect the manipulated state of the screw connection (12) when the first relative position (40a) and the second relative position (40b) are different from each other.

7. Sensor assembly (10) according to one of Claims 1 to 6, **characterized in that** the first component (14) with an external thread comprises a threaded tube (16), and the second component (18) with an internal thread comprises a cap nut (20).

8. Sensor assembly (10) according to Claim 7, **characterized in that** the magnet (34) is arranged on an inner side of a cap (21) of the cap nut (20), and the magnetic field sensor (32) is arranged on an end of the threaded tube (16) that faces the magnet (34) in the connected state of the screw connection (12).

9. Sensor assembly (10) according to Claim 7 or 8, **characterized in that** the diameter of the inner wall of the threaded tube (16) corresponds to the extent (S) of the magnetic field sensor (32) transverse with respect to the longitudinal axis (30) of the screw connection (12).

10. Sensor assembly (10) according to one of Claims 1 to 9, **characterized in that** the screw connection (12) comprises a third component (22) with an internal thread, the third component (22) with an internal thread being connectable to the first component (14) with an external thread, and **in that**, in the connected state of the screw connection (12), the distance (L) between the third component (22) with an internal thread and the second component (18) with an internal thread can be adjusted variably.

11. Sensor assembly (10) according to one of Claims 1 to 10, **characterized in that** the magnetic field sensor (32) comprises a Hall sensor.

12. Sensor assembly (10) according to one of Claims 1 to 11, **characterized in that** it comprises a control unit, which is designed to output appropriate information when the manipulated state of the screw connection (12) is determined.

13. System (100) having multiple sensor assemblies (10a, 10b, 10c) according to one of Claims 1 to 12, wherein each sensor assembly (10a, 10b, 10c) is designed to determine that there is a manipulated state of the respective screw connection (12a, 12b, 12c) in the event of detecting a change in the relative position (40a, 40b) between the respective magnet (34a, 34b, 34c) and the respective magnetic field sensor (32a, 32b, 32c),
the system (100) being formed in such a way that each sensor arrangement (10a, 10b, 10c) is uniquely identifiable with the aid of a unique MAC address in the system (100), and the system (100) being designed in such a way that the exact location of a manipulation of each sensor arrangement (10a, 10b, 10c) can be registered via this unique MAC address.

## Revendications

1. Ensemble (10) de capteur destiné à surveiller une liaison vissée (12) entre un premier composant (14) doté d'un filet extérieur et un deuxième composant (18) doté d'un filet intérieur, le deuxième composant (18) doté d'un filet intérieur pouvant être relié au premier composant (14) doté d'un filet extérieur,
l'ensemble présentant un capteur (32) de champ magnétique et un aimant (34), l'aimant (34) étant intégré dans le deuxième composant (18) doté d'un filet intérieur,
le capteur (32) de champ magnétique et l'aimant (34) étant disposés et configurés de telle sorte qu'une modification des positions relatives (40a, 40b) entre l'aimant (34) et le capteur (32) de champ magnétique puisse être détectée,
l'ensemble (10) de capteur constatant que liaison vissée (12) a été manipulée en cas de détection de la modification des positions relatives (40a, 40b) entre l'aimant (34) et le capteur (32) de champ magnétique,
la modification des positions relatives (40a, 40b) entre l'aimant (34) et le capteur (32) de champ magnétique correspondant à un angle de rotation (a) autour de l'axe longitudinal (30) de la liaison vissée (12),
le capteur (32) de champ magnétique étant inséré dans le premier composant (14) doté d'un filet extérieur,
**caractérisé en ce que**
le capteur (32) de champ magnétique est configuré de telle sorte que l'angle de rotation (a) puisse être détecté avec une tolérance de +/-0,1° dans une plage d'angles de rotation de 0,1° à 5° ou de 0,2° à 0,5°.

2. Ensemble (10) de capteur selon la revendication 1, **caractérisé en ce qu'**il est conçu pour saisir une première position relative (40a) entre le deuxième composant (18) doté d'un filet intérieur et le capteur (32) de champ magnétique dans une première situation de la liaison vissée (12) et pour la conserver en mémoire en tant que position de consigne.

3. Ensemble (10) de capteur selon la revendication 2, **caractérisé en ce que** l'ensemble de capteur est conçu pour saisir une deuxième position relative (40b) entre le deuxième composant (18) doté d'un filet intérieur et le capteur (32) de champ magnétique et pour la comparer à la position relative (40a) conservée en mémoire en tant que position de consigne.

4. Ensemble (10) de capteur selon la revendication 3, **caractérisé en ce que** que l'ensemble de capteur est conçu pour saisir à répétition la deuxième position relative (40b).

5. Ensemble (10) de capteur selon les revendications 3 ou 4, **caractérisé en ce que** que l'ensemble de capteur est conçu pour saisir la deuxième position relative (40b) lors du passage d'une situation débranchée de l'ensemble (10) de capteur à une situation branchée de l'ensemble (10) de capteur.

6. Ensemble (10) de capteur selon l'une des revendications 3 à 5, **caractérisé en ce que** que l'ensemble de capteur est conçu pour constater que la liaison vissée (12) a été manipulée si la première position relative (40a) et la deuxième position relative (40b) sont différentes l'une de l'autre.

7. Ensemble (10) de capteur selon l'une des revendications 1 à 6, **caractérisé en ce que** que le premier composant (14) doté d'un filet extérieur comprte un tube fileté (16) et le deuxième composant (18) doté d'un filet intérieur un écrou aveugle (20).

8. Ensemble (10) de capteur selon la revendication 7, **caractérisé en ce que** le deuxième composant (18) doté d'un filet intérieur est disposé sur le côté intérieur du capuchon (21) de l'écrou aveugle (20) et le capteur (32) de champ magnétique sur une extrémité du tube fileté (16) tournée vers le deuxième composant (18) doté d'un filet intérieur lorsque la liaison vissée (12) est en situation reliée.

9. Ensemble (10) de capteur selon les revendications 7 ou 8, **caractérisé en ce que** le diamètre de la paroi intérieure du tube fileté (16) correspond à l'extension (S) du capteur (32) de champ magnétique transversalement par rapport à l'axe longitudinal (30) de la liaison vissée (12).

10. Ensemble (10) de capteur selon l'une des revendications 1 à 9, **caractérisé en ce que** que la liaison vissée (12) comporte un troisième composant (22) doté d'un filet intérieur, le troisième composant (22) doté d'un filet intérieur pouvant être relié au premier composant (14) doté d'un filet extérieur, et **en ce que** lorsque la liaison vissée (12) est en situation vissée, la distance (L) entre le troisième composant (22) doté d'un filet intérieur et le deuxième composant (18) doté d'un filet intérieur peut être réglée de manière variable.

11. Ensemble (10) de capteur selon l'une des revendications 1 à 10, **caractérisé en ce que** que le capteur (32) de champ magnétique est un capteur de Hall.

12. Ensemble (10) de capteur selon l'une des revendications 1 à 11, **caractérisé en ce que** qu'il comporte une unité de commande conçue pour délivrer le cas échéant l'information que la liaison vissée (12) a été manipulée.

13. Système (100) comprenant plusieurs ensembles (10a, 10b, 10c) de capteur selon l'une des revendications 1 à 12, chaque ensemble (10a, 10b, 10c) de capteur étant conçu pour constater que la liaison vissée respective (12a, 12b, 12c) a été manipulée en cas de détection d'une modification des positions relatives (40a, 40b) entre l'aimant respectif (34a, 34b, 34c) et le capteur (32a, 32b, 32c) de champ magnétique respectif,
le système (100) étant configuré de telle sorte que chaque ensemble (10a, 10b, 10c) de capteur puisse être identifié de manière univoque à l'aide d'une adresse MAC univoque dans le système (100) et
le système (100) étant configuré de telle sorte que l'emplacement exact de la manipulation puisse être enregistré par chaque ensemble (10a, 10b, 10c) de capteur sur la base de cette adresse MAC univoque.
